# EUROPEAN PATENT APPLICATION

(11) **EP 3 910 510 A1**
(43) Date of publication of application: **17.11.2021**
(21) Application number: 20174992.6
(22) Date of filing: 15.05.2020
(51) Int. Cl.: G06F 21/44, H04L 9/08, H04L 9/32, G06F 11/30, G06F 21/73

(54) **A PROVISIONING APPARATUS AND METHOD FOR PROVISIONING ELECTRONIC COMPONENTS FOR ELECTRONIC DEVICES**

(71) Applicant: Secure Thingz Limited, Trumpington, Cambridge CB2 9FF (GB)
(72) Inventor: SPITZ, Stephan, 85757 Karlsfeld (DE); POVEY, Haydn, Cambridge, CB2 9FF (GB); WOODRUFF, Tim, Cambridge, CB2 1RR (GB)
(74) Representative: Patentship Patentanwaltsgesellschaft mbH

(57) **Abstract**

The invention relates to a provisioning apparatus (110) for performing a provisioning procedure with an electronic component (170) for an electronic device, wherein the provisioning procedure includes providing provisioning data (150) to the electronic component (170) and processing the provisioning data (150) by the electronic component (170). The provisioning apparatus (110) comprises a provisioning and sensing unit (160) configured to be electrically connected with the electronic component (170) for performing the provisioning procedure with the electronic component (170), wherein the provisioning and sensing unit (160) is further configured to detect a power profile of the electronic component (170), wherein the power profile represents the electric power consumed by the electronic component (170) and/or the electromagnetic power emitted by the electronic component (170) during the provisioning procedure. Moreover, the provisioning apparatus (110) comprises a provisioning control unit (140) configured to receive the power profile of the electronic component (170) from the provisioning and sensing unit (160) and to compare the power profile of the electronic component (170) with a reference power profile for the electronic component (170), wherein the provisioning control unit (140) is further configured to determine on the basis of the comparison between the power profile of the electronic component (170) and the reference power profile for the electronic component (170) whether the electronic component (170) is authentic or non-authentic. Moreover, the invention relates to a corresponding method for provisioning the electronic component (170).

## Description

### TECHNICAL FIELD

The invention relates to the secure production and provisioning of electronic components for electronic devices. More specifically, the invention relates to an apparatus and method for provisioning electronic components of electronic devices.

### BACKGROUND OF THE INVENTION

The production and assembly of state-of-the-art electronic devices, such as smartphones, tablet computers as well as other types of electronic consumer devices or loT devices, often happens in a distributed fashion in that the various electronic components, including the electronic chips or microprocessors of an electronic consumer device are manufactured, provisioned or personalized and finally assembled at different locations and by different parties. For instance, an electronic chip or microprocessor for an electronic device may be originally manufactured by a chip manufacturer and provisioned by another party with security sensitive provisioning data, such as electronic keys and/or a firmware, before being assembled into the final end product by the manufacturer of the electronic device, e.g. an OEM.

In such a distributed production and assembly chain it is important for a party provisioning electronic components for electronic devices to be sure that the not yet provisioned electronic components provided by another party, such as a chip manufacturer, are authentic, i.e. have not been replaced by an attacker with a fake electronic component for gaining access to the security sensitive provisioning data.

Thus, due to such distributed production and assembly chains of electronic devices there is a need for apparatuses and methods allowing for a secure and controlled provisioning of electronic components, such as chips or microprocessors, for electronic devices.

### SUMMARY OF THE INVENTION

It is therefore an object of the invention to provide apparatuses and methods allowing for a secure and controlled provisioning of electronic components, such as chips or microprocessors for electronic devices.

The foregoing and other objects are achieved by the subject matter of the independent claims. Further implementation forms are apparent from the dependent claims, the description and the figures.

According to a first aspect of the invention a provisioning apparatus for performing a provisioning procedure with an electronic component for an electronic device is provided, wherein the provisioning procedure includes providing security sensitive provisioning data to the electronic component and processing the security sensitive provisioning data by the electronic component.

The electronic components may comprise chips, microprocessors or other programmable electronic components, such as Flash memories, application processors, memory control units (MCUs), electrically erasable programmable read only memories (EEPROM), programmable logic devices (PLDs), field programmable gate arrays (FPGAs), systems-on-chip (SoC), and microcontrollers incorporating non-volatile memory elements.

The provisioning apparatus comprises a provisioning and sensing unit configured to be electrically connected with the electronic component for performing the provisioning procedure with the electronic component. The provisioning and sensing unit is further configured to detect a power profile of the electronic component, while performing the provisioning procedure with the electronic component, wherein the power profile represents the electric power consumed by the electronic component and/or the electromagnetic power emitted by the electronic component during the provisioning procedure. For instance, the provisioning and sensing unit may be configured to detect the power profile in the form of the electric current or voltage consumed by the electronic component over the course of the provisioning procedure.

Moreover, the provisioning apparatus comprises a provisioning control unit configured to receive the power profile of the electronic component from the provisioning and sensing unit and to compare the power profile of the electronic component with a reference power profile for the electronic component. The provisioning control unit is further configured to determine on the basis of the comparison between the power profile of the electronic component and the reference power profile for the electronic component whether the electronic component is authentic or non-authentic. In an embodiment, the provisioning control unit is configured to determine a difference between the power profile and the reference power profile and to determine the electronic component to be authentic, if the difference is smaller than a threshold value.

Advantageously, the provisioning apparatus according to the first aspect allows detecting non-authentic electronic components, such as fake electronic components used by an attacker for gaining access to the security sensitive provisioning data, by using the power profile of the electronic component as a kind of fingerprint of the electronic component. The provisioning control unit and the provisioning and sensing unit may be under the control of different parties, as will be described in more detail below.

In a further embodiment, in case the electronic component is determined by the provisioning control unit to be non-authentic, the provisioning control unit is further configured to instruct the provisioning and sensing unit to terminate the provisioning procedure of the electronic component. Thus, in that case the non-authentic electronic component is non functionable.

In a further embodiment, in case the electronic component is determined by the provisioning control unit to be non-authentic, the provisioning control unit is configured to let the provisioning and sensing unit complete the provisioning procedure of the electronic component and block the electronic component from using the provisioning data. Thus, in that case the non-authentic electronic component only has a limited functionality in comparison to a fully provisioned authentic electronic component.

In a further embodiment, the security sensitive provisioning data comprises program code, wherein the provisioning procedure comprises executing the program code by the electronic component. Alternatively or additionally, the provisioning data may comprise one or more electronic keys, wherein the provisioning procedure comprises performing a cryptographic operation by the electronic component using the one or more electronic keys.

In a further embodiment, the provisioning control unit comprises a processor and a memory, wherein the processor is configured to retrieve the reference power profile for the electronic component from the memory for comparing the power profile of the electronic component with the reference power profile for the electronic component. The reference power profile may be provided to the provisioning control unit by the manufacturer of the electronic component.

In a further embodiment, the processor of the provisioning control unit is further configured to store the power profile of the electronic component received from the provisioning and sensing unit in the memory.

In a further embodiment, the processor of the provisioning control unit is further configured to generate the reference power profile on the basis of a plurality of power profiles of a plurality of authentic electronic components. For instance, the processor of the provisioning control unit may generate the reference power profile as an average of a plurality of power profiles recorded for a plurality of authentic electronic components.

In a further embodiment, in case the electronic component is determined by the provisioning control unit to be authentic, the processor of the provisioning control unit is further configured to adjust the reference power profile on the basis of the power profile of the electronic component. For instance, the processor of the provisioning control unit may be configured to include a currently recorded power profile of an authentic electronic component into the set of power profiles used for generating the reference power profile.

In a further embodiment, the provisioning and sensing unit is configured to be electrically connected with a plurality of electronic components for performing the provisioning procedure with the plurality of electronic components substantially simultaneously, wherein the provisioning and sensing unit is further configured to detect a respective power consumption profile of each of the plurality of electronic components, wherein the respective power profile represents the electric power consumed by the respective electronic component and/or the electromagnetic power emitted by the respective electronic component during the provisioning procedure. In this embodiment, the provisioning control unit is configured to receive the respective power profile of each of the plurality of electronic components from the provisioning and sensing unit and to compare the respective power profile of each of the plurality of electronic components with the reference power profile, wherein the reference power profile is an average of the plurality of power profiles of the plurality of electronic components currently being provisioned by the provisioning apparatus. In other words, the provisioning apparatus is configured to perform a kind of differential power analysis for detecting non-authentic electronic components.

In a further embodiment, the provisioning control unit comprises a communication interface, wherein the communication interface is configured to receive the provisioning data over a communication network from a remote server and to transmit the provisioning data to the provisioning and sensing unit for performing the provisioning procedure with the electronic component. The remote server may be under the control or associated with the party using the provisioned electronic components for assembling electronic devices.

In a further embodiment, the communication interface of the provisioning control unit is configured to communicate with the provisioning and sensing unit via a wired connection.

According to a second aspect a method for performing a provisioning procedure with an electronic component for an electronic device is provided, wherein the provisioning procedure includes providing security sensitive provisioning data to the electronic component and processing the security sensitive provisioning data by the electronic component. The method according to the second aspect comprises the following steps:
detecting a power profile of the electronic component, while performing the provisioning procedure with the electronic component, wherein the power profile represents the electric power consumed by the electronic component and/or the electromagnetic power emitted by the electronic component during the provisioning procedure;
comparing the power profile of the electronic component with a reference power profile for the electronic component; and
determining on the basis of the comparison between the power profile of the electronic component and the reference power profile for the electronic component whether the electronic component is authentic or non-authentic.

In a further embodiment, the method comprises the further step of terminating the provisioning procedure of the electronic component, in case the electronic component is determined to be non-authentic.

In a further embodiment, the method comprises the further steps of completing the provisioning procedure of the electronic component and blocking the electronic component from using the provisioning data, in case the electronic component is determined to be non-authentic.

In a further embodiment, the method comprises the further step of generating the reference power profile on the basis of a plurality of power profiles of a plurality of authentic electronic components.

In a further embodiment, the method comprises the further step of adjusting the reference power profile on the basis of the power consumption profile of the electronic component.

The provisioning method according to the second aspect of the invention can be performed by the provisioning apparatus according to the first aspect of the invention. Further features of the provisioning method according to the second aspect of the invention result directly from the functionality of the provisioning apparatus according to the first aspect of the invention and its different implementation forms described above and below.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a provisioning system including a provisioning apparatus according to an embodiment of the invention;
Fig. 2 shows a signaling diagram illustrating the interaction of the provisioning apparatus of figure 1 with the other components of the provisioning system of figure 1; and
Fig. 3 shows a flow diagram illustrating steps of a provisioning method according to an embodiment of the invention.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

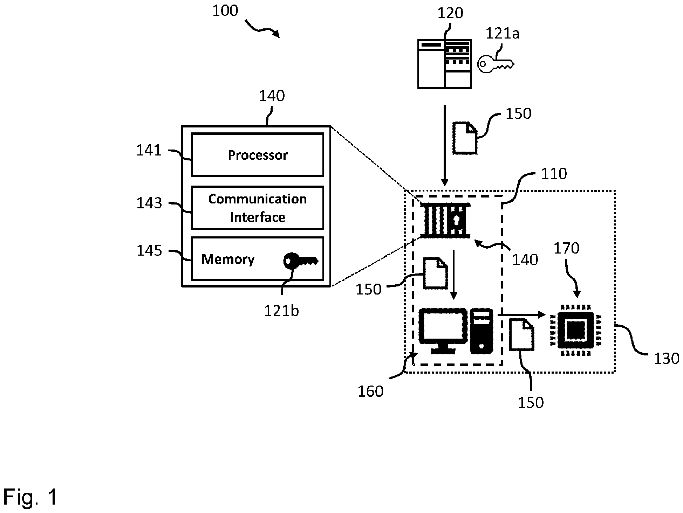

Figure 1 shows a schematic diagram of a provisioning system 100 according to an embodiment of the invention, including a provisioning apparatus 110 according to an embodiment of the invention. As will be described in more detail further below, the provisioning apparatus 110 may comprise a secure provisioning control unit 140 and a provisioning and sensing unit 160 for provisioning or personalizing electronic components 170, such as chips or microprocessors 170 with security sensitive provisioning data 150, such as program code, e.g. a firmware, and/or one or more electronic keys. In the embodiment illustrated in figure 1 the provisioning control unit 140 comprises a processor 141, a communication interface 143 and a non-transient electronic memory 145.

As illustrated in figure 1, the provisioning apparatus 110, in particular the provisioning control unit 140 thereof may be configured to communicate with a remote server 120 via a communication network, such as the Internet. Thus, the provisioning apparatus 110 and the remote server 120 may be at different locations and under the control of different parties. As illustrated in figure 1, the provisioning apparatus 110, including the provisioning control unit 140 and the provisioning and sensing unit 160 may be located within a production environment 130, such as a personalization factory 130. In an embodiment, the remote server 120 may be under the control or associated with an electronic device manufacturer, e.g. an OEM, wherein the electronic device manufacturer assembles electronic devices, such as smartphones, tablet computers or other types of loT or electronic consumer devices, using the electronic components 170 provisioned by the provisioning apparatus 110 with the security sensitive provisioning data 150.

In an embodiment, the security sensitive provisioning data 150 may comprise a program code 150, e.g. a firmware and/or one or more electronic keys provided by the electronic device manufacturer associated with the remote server 120. In an embodiment, the provisioning apparatus 110 and the remote server 120 are configured to securely communicate with each other using one or more cryptographic schemes, such as a public key infrastructure and/or a hybrid cryptographic scheme. In an embodiment, the communication interface 143 of the provisioning control unit 140 is configured to receive the security sensitive provisioning data 150 (or at least a portion thereof) in encrypted form from the remote server 120, wherein the processor 141 is configured to decrypt the encrypted provisioning data 150. For instance, a hybrid encryption scheme, such as PKCS#7, may be used. To this end, respective keys 121a, 121b may be provided at the remote server 120 and in the memory 145 of the provisioning control unit 140. Additionally or alternatively, the security sensitive provisioning data 150 provided by the remote server 120 may be digitally signed by the remote server 120.

The provisioning apparatus 110 illustrated in figure 1 is configured to perform a provisioning procedure with the electronic component 170, wherein the provisioning procedure includes providing the security sensitive provisioning data 150 to the electronic component 170 and processing the security sensitive provisioning data 150 by the electronic component 170. As will be appreciated, the electronic component 170 is an example for a plurality of electronic components 170 to be provisioned by the provisioning apparatus 110. In an embodiment, the provisioning apparatus 110 may be configured to provision a plurality of like electric components 170 with the same or similar provisioning data 150 (e.g. provisioning data only differing by different keys contained in the provisioning data 150) substantially simultaneously. The electronic components 170 may comprise chips, microprocessors or other programmable electronic components, such as Flash memories, application processors, memory control units (MCUs), electrically erasable programmable read only memories (EEPROM), programmable logic devices (PLDs), field programmable gate arrays (FPGAs), systems-on-chip (SoC), and microcontrollers incorporating non-volatile memory elements.

As illustrated in figure 1, the provisioning and sensing unit 160 of the provisioning apparatus 110 is configured to be electrically connected with the electronic component 170 for performing the provisioning procedure with the one or more electronic components 170. The provisioning control unit 140 is configured to be coupled to the provisioning and sensing unit 160, for instance, by a wired or a wireless connection. In an embodiment, the provisioning and sensing unit 160 may be implemented as a personal computer and the provisioning control unit 140 may be implemented as a PC card inserted in the provisioning and sensing unit 160 and, thus, providing the provisioning apparatus 110. The provisioning and sensing unit 160 may comprise an electrical and/or mechanical interface for interacting directly or indirectly via a provisioning equipment with the electronic device 170. For instance, the provisioning and sensing unit 160 may comprise or control a personalization tray for personalizing a batch of electronic components 170 inserted therein.

The provisioning and sensing unit 160 of the provisioning apparatus 110 is further configured to detect a power profile of the electronic component 170, while performing the provisioning procedure with the electronic component 170. As used herein, the power profile represents the electric power consumed by the electronic component 170 and/or the electromagnetic power emitted by the electronic component 170 during its provisioning procedure. For instance, the provisioning and sensing unit 160 may be configured to detect the electric current or voltage consumed by the electronic component 170 over the course of the provisioning procedure. To this end, the provisioning and sensing unit 160 comprises suitable electronic equipment for measuring the electric power consumed by the electronic component 170, such as an ammeter or voltmeter, and/or the electromagnetic power emitted by the electronic component 170, such as antenna. In an embodiment, the provisioning and sensing unit 160 is configured to sample, i.e. measure the electric power consumed by the electronic component 170 and/or the electromagnetic power emitted by the electronic component 170 at a plurality of points in time during the provisioning procedure.

In an embodiment, the security sensitive provisioning data 150 may comprises program code 150, e.g. a firmware 150 or a boot portion thereof, wherein the provisioning procedure comprises executing the program code 150 by the electronic component 170.

Alternatively or additionally, the security sensitive provisioning data 150 may comprise one or more electronic keys 150, wherein the provisioning procedure comprises performing a cryptographic operation by the electronic component 170 using the one or more electronic keys 150.

The provisioning control unit 140 of the provisioning apparatus 110 illustrated in figure 1 is configured to receive, for instance, via its communication interface 143 the power profile of the electronic component 170 from the provisioning and sensing unit 160. Moreover, the processor 141 of the provisioning control unit 140 of the provisioning apparatus 110 is configured to compare the power profile of the electronic component 170 with a reference power profile for the electronic component 170. The processor 141 of the provisioning control unit 140 is further configured to determine on the basis of the comparison between the power profile of the electronic component 170 and the reference power profile for the electronic component 170 whether the electronic component 170 is authentic or non-authentic. Thus, advantageously the provisioning apparatus 110 is capable of detecting and identifying non-authentic electronic components 170, such as fake electronic components 170 used by a malicious attacker for gaining access to the security sensitive provisioning data 150.

In an embodiment, the processor 141 of the provisioning control unit 140 may be configured to determine a difference between the power profile of the electronic component 170 and the reference power profile for the electronic component 170 and to determine the electronic component 170 to be authentic, if the difference is smaller than a threshold value for all sample points. As will be appreciated, several other data processing schemes may be used for assessing whether the differences between the power profile and the reference power profile of the electronic component 170 are within normal tolerance values or outside thereof and, thus, indicate that the electronic component 170 has been tampered with. For instance, the processor 141 of the provisioning control unit 140 may be configured to determine the electronic component 170 to be authentic, if the sum of the squares of the differences between the power profile and the reference power profile at a plurality of sample points is smaller than a threshold value.

In an embodiment, the processor 141 of the provisioning control unit 140 may retrieve the reference power profile for the electronic component 170 from the memory 145 of the provisioning control unit 140 for comparing the power profile of the electronic component 170 received from the provisioning and sensing unit 160 with the reference power profile for the electronic component 170 retrieved from the memory 145. In an embodiment, the processor 141 of the provisioning control unit 140 is further configured to store the power profile of the electronic component 170 received from the provisioning and sensing unit 160 in the memory 145, in case the electronic component 170 has been determined by the provisioning control unit 140 to be authentic.

In an embodiment, in case the electronic component 170 is determined by the provisioning control unit 140 to be non-authentic, the processor 141 of the provisioning control unit 140 is further configured to instruct via its communication interface 143 the provisioning and sensing unit 160 to terminate the provisioning procedure of the electronic component 170. In this case the provisioning procedure of the electronic component 170 will not be completed so that the non-authentic electronic component 170 is non-functionable.

According to an alternative embodiment, in case the electronic component 170 is determined by the provisioning control unit 140 to be non-authentic, the processor 141 of the provisioning control unit 140 is configured to let the provisioning and sensing unit 160 complete the provisioning procedure of the electronic component 170 and block the electronic component 170 from using the security sensitive provisioning data 150 provided thereon. Thus, in this case the non-authentic electronic component 170 will only have a limited functionality in comparison to a fully provisioned authentic electronic component 170.

In a further embodiment, the processor 141 of the provisioning control unit 140 is further configured to generate the reference power profile on the basis of a plurality of power consumption profiles recorded by the provisioning and sensing unit 160 during previous provisioning procedures of a plurality of authentic electronic components 170. For instance, the processor 141 of the provisioning control unit 140 may be configured to generate the reference power profile as an average of the plurality of power profiles recorded for a plurality of previously provisioned authentic electronic components 170.

In a further embodiment, in case the currently provisioned electronic component 170 is determined to be authentic, the processor 141 of the provisioning control unit 140 is further configured to adjust the reference power profile on the basis of the power profile of the currently provisioned electronic component 170. For instance, the processor 141 of the provisioning control unit 140 may be configured to include a currently recorded power profile of the currently provisioned authentic electronic component 170 into the set of power profiles used for generating the reference power profile.

As already described above, in an embodiment, the provisioning and sensing unit 160 is configured to be electrically connected with a plurality of electronic components 170 for performing the provisioning procedure with the plurality of electronic components substantially simultaneously. Thus, the provisioning and sensing unit 160 may be further configured to detect a respective power consumption profile of each of the plurality of electronic components 170, wherein the respective power profile represents the electric power consumed by the respective electronic component 170 and/or the electromagnetic power emitted by the respective electronic component 170 during the provisioning procedure. In such an embodiment, the provisioning control unit 140 is configured to receive the respective power profile of each of the plurality of electronic components 170 from the provisioning and sensing unit 160 and to compare the respective power profile of each of the plurality of electronic components 170 with the reference power profile. In an embodiment, the reference power profile may be an average of the plurality of power profiles of the plurality of electronic components 170 currently being provisioned by the provisioning apparatus 110. In other words, in an embodiment, the provisioning apparatus 110 is configured to perform a kind of differential power analysis for detecting non-authentic electronic components 170.

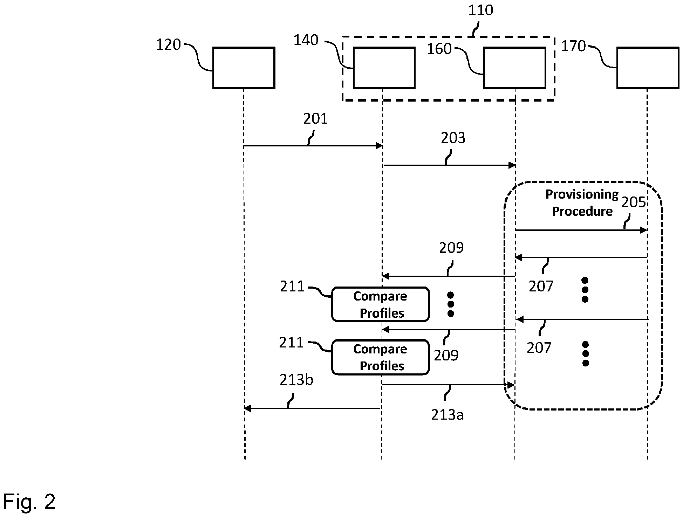

Figure 2 shows a signaling diagram illustrating the interaction of the provisioning apparatus 110 and its components, i.e. the provisioning control unit 140 and the provisioning and sensing unit 160, with the other components of the provisioning system 100, i.e. the remote server 120 and the electronic component(s) 170 to be provisioned. In figure 2 the following steps are illustrated, some of which already have been described in the context of figure 1.

In step 201 of figure 2, by way of example the remote server 120 (associated, for instance, with a specific electronic device manufacturer) sends security sensitive provisioning data 150 to the provisioning control unit 140 of the provisioning apparatus 110 to be used for provisioning electronic components 170 to be implemented into electronic devices. The security sensitive provisioning data 150 may be encrypted and/or digitally signed by the remote server 120 using one or more electronic keys 121a.

In step 203 of figure 2, the provisioning control unit 140 provides the security sensitive provisioning data 150 to the provisioning and sensing unit 160. In case the security sensitive provisioning data 150 has been encrypted and/or digitally signed by the remote server 120 this step may comprise the decryption and or verification of the digital signature of the security sensitive provisioning data 150 by the processor 141 of the provisioning control unit 140 using one or more keys 121 b stored in the memory 145 thereof.

Having received the security sensitive provisioning data 150 from the provisioning control unit 140 in step 203 of figure 2, the provisioning and sensing unit 160 starts the provisioning procedure with the electronic component(s) 170. In a first stage of this provisioning procedure the provisioning and sensing unit 160 transmits the security sensitive provisioning data 150 to the electronic component(s) 170, as illustrated by step 205 of figure 2.

As already described above, the security sensitive provisioning data 150 may comprises program code 150, e.g. a firmware 150 or a boot portion thereof, and/or one or more electronic keys 150, wherein the provisioning procedure comprises executing the program code 150 by the electronic component(s) 170 and/or performing a cryptographic operation by the electronic component(s) 170 using the one or more electronic keys 150. The electrical power (e.g. current or voltage) required by the electronic component 170 for performing these electronic operations (and/or the electromagnetic power radiated by the electronic component 170) is continuously monitored and recorded by the provisioning and sensing unit 160 for obtaining the power profile of the electronic component 170, as illustrated by steps 207 of figure 2.

In steps 209 of figure 2, the provisioning and sensing unit 160 provides the information about the electrical power (e.g. current or voltage) required by the electronic component 170 and/or the electromagnetic power emitted by the electronic component 170, i.e. the power profile of the electronic component 170 to the provisioning control apparatus 140. As will be appreciated and as illustrated in figure 2, the provisioning and sensing unit 160 will continuously make the power profile of the electronic component 170 more complete by adding more sample points to the power profile of the electronic component 170.

Having received the continuously updated power profile of the electronic component 170 in steps 209 of figure 2, the provisioning control apparatus 140 in steps 211 of figure 2 continuously may check whether the electronic component 170 is authentic by comparing the power profile of the electronic component 170 provided by the provisioning and sensing unit 160 with a reference power profile for the electronic component 170 stored, for instance, in the memory 145 of the provisioning control apparatus 140.

If based on this comparison the provisioning control unit 140 determines the electronic component 170 to be non-authentic (e.g. the power profile of the electronic component 170 provided by the provisioning and sensing unit 160 and the reference power profile for the electronic component 170 differ substantially), the provisioning control unit 140 may instruct the provisioning and sensing unit 160 to terminate the ongoing provisioning procedure of the electronic component 170, as illustrated by step 213a of figure 2.

Alternately, the provisioning control unit 140 may let the provisioning and sensing unit 160 complete the provisioning procedure of the electronic component 170 and block the electronic component 170 from using the provisioning data 150 provided thereon. In step 213b of figure 2, the provisioning control unit 140 may send information (e.g. an identifier) about the non-authentic electronic component 170 and its limited functionality to the remote server 120.

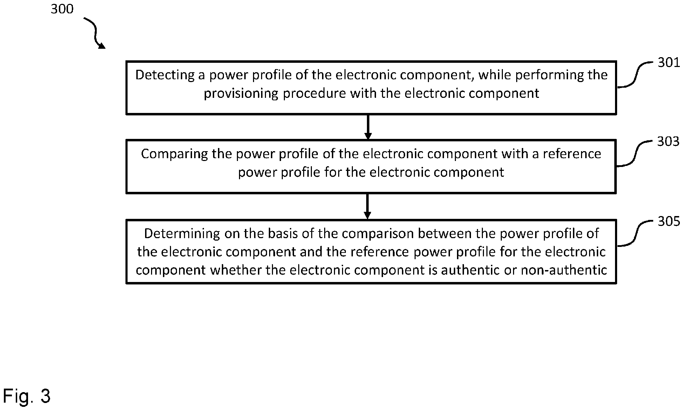

Figure 3 shows a flow diagram illustrating steps of a corresponding method 300 for performing a provisioning procedure with an electronic component 170 for an electronic device, wherein the provisioning procedure includes providing security sensitive provisioning data 150 to the electronic component 170 and processing the security sensitive provisioning data 150 by the electronic component 170, wherein the method 300 comprises the steps of:
detecting, i.e. sensing 301 a power profile of the electronic component 170, while performing the provisioning procedure with the electronic component 170, wherein the power profile represents the electric power consumed by the electronic component 170 and/or the electromagnetic power emitted by the electronic component 170 during the provisioning procedure;
comparing 303 the power profile of the electronic component 170 with a reference power profile for the electronic component 170; and
determining 305 on the basis of the comparison between the power consumption profile of the electronic component 170 and the reference power consumption profile for the electronic component 170 whether the electronic component 170 is authentic or non-authentic.

As will be appreciated, embodiments of the invention provide a higher flexibility with respect to the secure production and personalization of electronic devices and equipment. Moreover, embodiments of the invention allow delegating secure production of electronic devices and components for electronic equipment. Moreover, embodiments of the invention allow load balancing and on-demand production/personalization of security critical systems.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A provisioning apparatus (110) for performing a provisioning procedure with an electronic component (170) for an electronic device, the provisioning procedure including providing provisioning data (150) to the electronic component (170) and processing the provisioning data (150) by the electronic component (170), wherein the provisioning apparatus (110) comprises:
a provisioning and sensing unit (160) configured to be electrically connected with the electronic component (170) for performing the provisioning procedure with the electronic component (170), wherein the provisioning and sensing unit (160) is further configured to detect a power profile of the electronic component (170), wherein the power profile represents the electric power consumed by the electronic component (170) and/or the electromagnetic power emitted by the electronic component (170) during the provisioning procedure; and
a provisioning control unit (140) configured to receive the power profile of the electronic component (170) from the provisioning and sensing unit (160) and to compare the power profile of the electronic component (170) with a reference power profile for the electronic component (170), wherein the provisioning control unit (140) is further configured to determine on the basis of the comparison between the power profile of the electronic component (170) and the reference power profile for the electronic component (170) whether the electronic component (170) is authentic or non-authentic.

2. The provisioning apparatus (110) of claim 1, wherein, in case the electronic component (170) is non-authentic, the provisioning control unit (140) is further configured to instruct the provisioning and sensing unit (160) to terminate the provisioning procedure of the electronic component (170).

3. The provisioning apparatus (110) of claim 1, wherein, in case the electronic component (170) is non-authentic, the provisioning control unit (140) is configured to let the provisioning and sensing unit (160) complete the provisioning procedure of the electronic component (170) and block the electronic component (170) from using the provisioning data (150).

4. The provisioning apparatus (110) of any one of the preceding claims, wherein the provisioning data (150) comprises program code (150) and the provisioning procedure comprises executing the program code (150) by the electronic component (170) and/or wherein the provisioning data (150) comprises one or more electronic keys (150) and the provisioning procedure comprises performing a cryptographic operation by the electronic component (170) using the one or more electronic keys (150).

5. The provisioning apparatus (110) of any one of the preceding claims, wherein the provisioning control unit (140) comprises a processor (141) and a memory (145), wherein the processor (141) is configured to retrieve the reference power profile for the electronic component (170) from the memory (145) for comparing the power profile of the electronic component (170) with the reference power profile for the electronic component (170).

6. The provisioning apparatus (110) of claim 5, wherein the processor (141) of the provisioning control unit (140) is further configured to store the power profile of the electronic component (170) received from the provisioning and sensing unit (160) in the memory (145).

7. The provisioning apparatus (110) of claim 6, wherein the processor (141) of the provisioning control unit (140) is further configured to generate the reference power profile on the basis of a plurality of power profiles of a plurality of authentic electronic components (170).

8. The provisioning apparatus (110) of any one of the preceding claims, wherein, in in case the electronic component (170) is authentic, the processor (141) of the provisioning control unit (140) is further configured to adjust the reference power profile on the basis of the power profile of the electronic component (170).

9. The provisioning apparatus (110) of any of the preceding claims, wherein the provisioning and sensing unit (160) is configured to be electrically connected with a plurality of electronic components (170) for performing the provisioning procedure with the plurality of electronic components (170), wherein the provisioning and sensing unit (160) is further configured to detect a respective power consumption profile of each of the plurality of electronic components (170), wherein the respective power profile represents the electric power consumed by the respective electronic component (170) and/or the electromagnetic power emitted by the respective electronic component (170) during the provisioning procedure, and
wherein the provisioning control unit (140) is configured to receive the respective power profile of each of the plurality of electronic components (170) from the provisioning and sensing unit (160) and to compare the respective power profile of each of the plurality of electronic components (170) with the reference power profile, wherein the reference power profile is an average of the plurality of power profiles of the plurality of electronic components (170).

10. The provisioning apparatus (110) of any one of the preceding claims, wherein the provisioning control unit (140) comprises a communication interface (143), wherein the communication interface (143) is configured to receive the provisioning data (150) over a communication network from a remote server (120) and to transmit the provisioning data (150) to the provisioning and sensing unit (160) for performing the provisioning procedure with the electronic component (170).

11. A method (300) for performing a provisioning procedure with an electronic component (170) for an electronic device, the provisioning procedure including providing provisioning data (150) to the electronic component (170) and processing the provisioning data (150) by the electronic component (170), wherein the method (300) comprises:
detecting (301) a power profile of the electronic component (170), while performing the provisioning procedure with the electronic component (170), wherein the power profile represents the electric power consumed by the electronic component (170) and/or the electromagnetic power emitted by the electronic component (170) during the provisioning procedure;
comparing (303) the power profile of the electronic component (170) with a reference power profile for the electronic component (170); and
determining (305) on the basis of the comparison between the power profile of the electronic component (170) and the reference power profile for the electronic component (170) whether the electronic component (170) is authentic or non-authentic.

12. The method (300) of claim 11, further comprising terminating the provisioning procedure of the electronic component (170), in case the electronic component (170) is non-authentic.

13. The method (300) of claim 11, further comprising completing the provisioning procedure of the electronic component (170) and blocking the electronic component (170) from using the provisioning data (150), in case the electronic component (170) is non-authentic.

14. The method (300) of any one of claims 11 to 13, further comprising generating the reference power profile on the basis of a plurality of power profiles of a plurality of authentic electronic components (170).

15. The method (300) of any one of claims 11 to 14, further comprising adjusting the reference power profile on the basis of the power profile of the electronic component (170).
